Europäisches Patentamt

European Patent Office

Office européen des brevets

(19)

(11) Veröffentlichungsnummer : **0 169 943**
**B1**

(12) **EUROPÄISCHE PATENTSCHRIFT**

(45) Veröffentlichungstag der Patentschrift :
02.11.89

(21) Anmeldenummer : 84116216.7

(22) Anmeldetag : 22.12.84

(51) Int. Cl.⁴ : **B 25 J 17/02**

(54) Getriebekopf für Manipulatoren.

(30) Priorität : 03.08.84 DE 3428748

(43) Veröffentlichungstag der Anmeldung :
05.02.86 Patentblatt 86/06

(45) Bekanntmachung des Hinweises auf die Patenterteilung : 02.11.89 Patentblatt 89/44

(84) Benannte Vertragsstaaten :
**BE NL**

(56) Entgegenhaltungen :
EP--A-- 0 072 624
EP--A-- 0 106 561
EP--A-- 0 133 499
DE--A-- 2 717 870
DE--B-- 2 225 476
FR--A-- 2 551 390
SU--A-- 766 856
US--A-- 3 712 481
US--A-- 4 046 262
US--A-- 4 151 390

(73) Patentinhaber : **KUKA Schweissanlagen & Roboter
GmbH
Blücherstrasse 144
D-8900 Augsburg (DE)**

(72) Erfinder : **Zimmer, Ernst
Michael-Steinherr Strasse 34
D-8904 Friedberg (DE)**

(74) Vertreter : **Ernicke, Hans-Dieter, Dipl.-Ing. et al
Schwibbogenplatz 2b
D-8900 Augsburg (DE)**

Jouve, 18, rue St-Denis, 75001 Paris, France

## Beschreibung

Die Erfindung betrifft einen Getriebekopf für Manipulatoren, bestehend aus hintereinander angeordneten und um zueinander schräge Achsen gelagerten Kopfteilen.

Durch die DE-B-29 27 485 und die DE-A-27 45 932 sind Getriebeköpfe mit zwei hintereinander angeordneten und um eine schräge Achse aneinander gelagerten Kopfteilen bekannt, von denen der vordere Kopfteil einen darin drehbar gelagerten und angetriebenen Arbeitsflansch trägt. In der Streckstellung dieser vorbekannten Getriebeköpfe stimmen die Drehachse des hinteren Kopfteiles und die Drehachse des Arbeitsflansches miteinander überein. Diese Grundstellung bringt Schwierigkeiten bei der rechnerisch gesteuerten Bewegung des Manipulators. Eine vom Programm vorgegebene Verdrehung eines am Arbeitsflansch angeordneten Werkzeuges um seine eigene Drehachse läßt in der Durchführung der rechnerischen Vorgabe nämlich offen, ob der Getriebekopf um die Achse des hinteren Kopfteiles oder um die Achse des Arbeitsflansches gedreht werden soll.

Außerdem ist der Bewegungsbereich des Arbeitsflansches und damit des daran befestigbaren Werkzeuges oder Werkstückes begrenzt. Im Falle der DE-B-29 27 485 kann die Achse des Arbeitsflansches aus der Streckstellung nur um 90° verschwenkt werden. Beim Gegenstand der DE-A-27 45 932 bildet die Drehachse des vorderen Kopfteiles gegenüber der Drehachse des hinteren Kopfteiles in der Streckstellung einen Winkel von 60°, so daß die Achse des Arbeitsflansches aus der Streckstellung um bis zu 120° verschwenkt werden kann.

Der Erfindung liegt die Aufgabe zugrunde, einen Getriebekopf für Manipulatoren so auszubilden, daß die erwähnten Zweideutigkeiten gar nicht entstehen können und außerdem ein wesentlich vergrößerter Bewegungsspielraum bei kompakter Bauweise des Getriebekopfes erreicht wird.

Die Lösung dieser Aufgabe ergibt sich aus den Merkmalen des Patentanspruches 1.

Diese unterscheiden sich vom Stand der Technik dadurch, daß der erfindungsgemäße Getriebekopf drei hintereinander angeordnete und um zueinander schräge Achsen gelagerte Kopfteile besitzt, deren schräge Achsen in der Streckstellung des Getriebekopfes sich in einer anderen Lage als beim Stand der Technik befinden.

Bei der Erfindung trägt der vordere der drei Kopfteile den Arbeitsflansch, wobei aber dieser vordere Kopfteil in der Streckstellung nur um eine schräge Achse rotieren kann. Damit wird eine Zweideutigkeit beim Rotieren des Arbeitsflansches um die Achse des Getriebekopfes ausgeschlossen, weil jedenfalls eine Verdrehung des vorderen Kopfteiles nicht dazu führt, daß der Arbeitsflansch um die Achse des Getriebekopfes rotieren kann.

Mit den Merkmalen der Erfindung wird aber auch ein wesentlich vergrößerter Bewegungsspielraum bei kompakter Bauweise des Getriebekopfes erreicht. Wenn man die Winkel der schrägen Achsen für die Lagerung des mittleren am vorderen und hinteren Kopfteil passend wählt, kann die Achse der Flanschfläche aus der Streckstellung des erfindungsgemäßen Getriebekopfes auch um 180° verschwenkt werden.

Die Erfindung eröffnet die Möglichkeit, die schrägen Achsen der Kopfteile in einem abseits der Längsachse des Getriebekopfes sich befindlichen Punkt oder in einen auf dieser Längsachse sich befindlichen Punkt sich schneiden zu lassen.

Wenn sich die schrägen Achsen der Kopfteile in einem auf der Längsachse befindlichen Punkt sich schneiden, hat dies den Vorteil der weniger aufwendigen Berechnung als Grundlage für eine Bahnsteuerung. Allerdings wird dadurch die Zentrierachse der Anflanschfläche zur Antriebsachse versetzt. Um dennoch koaxiale Lage des Werkzeuges zur Antriebsachse zu erreichen, was für manche Arbeitsvorgänge bewegungstechnisch vorteilhaft wäre, können Maßnahmen getroffen werden, das Werkzeug längs der Anflanschfläche in radialer Richtung beweglich und festspannbar zu führen.

Der Gegenstand der Erfindung bietet die Voraussetzung zur besonders geringvolumigen Bauweise des Getriebekopfes, weil im Sinne der Erfindung die Untersetzungsgetriebe abtriebsseitig und im mittleren Getriebekopfteil angeordnet werden können. Obwohl dadurch die Dimension des mittleren Getriebekopfteiles in Richtung der Antriebsachse notwendigerweise vergrößert wird, ergibt sich dennoch ein wesentlich vergrößerter Bewegungsspielraum des Getriebekopfteiles, der es sogar ermöglicht, die Anflanschfläche des hinteren Kopfteiles um wesentlich mehr als 90°, sogar um 180° aus der Streckstellung des Getriebekopfes heraus zu bewegen.

In den weiteren Unteransprüchen sind vorteilhafte Ausgestaltungen der Erfindung angegeben. Gemäß den Unteransprüchen 7 bis 11 ist es beispielsweise ohne wesentlichen Aufwand möglich, einen sechs Achsen umfassenden Manipulator auf eine fünffachige Steuerung umzustellen und deshalb nur fünf Antriebsmotore einsetzen zu müssen. Solche Manipulatoren können ohne weiteres für bestimmte Aufgaben, z. B. Schutzgasschweißen, eingesetzt werden.

Weitere Einzelheiten der Erfindung ergeben sich aus der Zeichnung. In der Zeichnung ist die Erfindung beispielsweise und schematisch dargestellt. Es zeigen :

Fig. 1 : eine symbolische Seitenansicht eines Getriebekopfes in seiner gestreckten Lage,

Fig. 2 : eine Seitenansicht des Getriebekopfes gem. Fig. 1 mit einer Winkelstellung des vorderen Kopfteiles,

Fig. 3 : eine Seitenansicht des Getriebekopfes gem. Fig. 2 mit einer um 180° verdrehten Lage des Getriebekopfes,

Fig. 4 : eine Seitenansicht des Getriebekopfes gem. Fig. 1 mit einer verschwenkten Stellung des mittleren Kopfteiles,

Fig. 5 : eine Seitenansicht des Getriebekopfes gem. Fig. 1 mit verschwenkter Lage des mittleren und des vorderen Kopfteiles und

Fig. 6 : einen schematischen Längsschnitt durch den Getriebekopf mit seinen Antriebszügen entsprechend einer Anordnung gem. Fig. 1,

Fig. 7 : einen Längsschnitt durch den Getriebekopf gem. Fig. 6 mit einer Antriebsvariante und

Fig. 8 : einen Längsschnitt einer Variante zu Fig. 6.

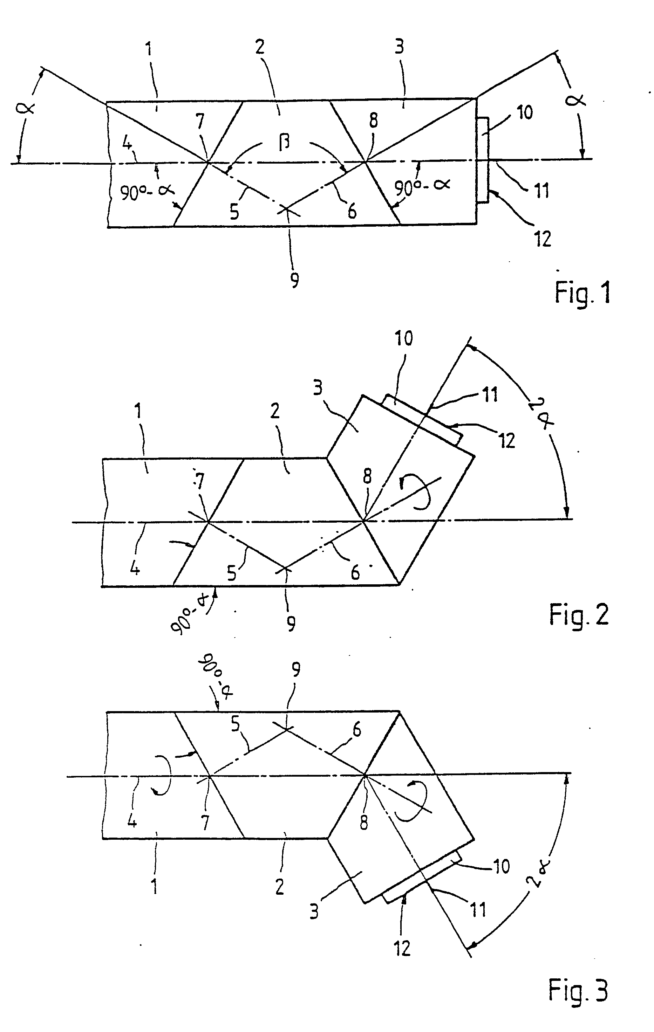

Im Ausführungsbeispiel der Fig. 1 ist der erfindungsgemäße Getriebekopf in seiner geometrischen Gliederung ganz schematisch als rohrförmiger Körper dargestellt. Danach besitzt der Getriebekopf einen hinteren Kopfteil (1), einen mittleren Kopfteil (2) und einen vorderen Kopfteil (3). Der hintere Kopfteil (1) ist um die Achse (4), die im allgemeinen der Längsachse des Auslegers eines Manipulators entspricht, verdrehbar. An diesem hinteren Kopfteil (1) ist der mittlere Kopfteil (2) um die Schwenkachse (5) drehbar gelagert. Beide Achsen (4, 5) schneiden sich im Schnittpunkt (7). Am mittleren Kopfteil (2) ist wiederum der vordere Kopfteil (3) um die Schwenkachse (6) drehbar gelagert. Diese Schwenkachse (6) schneidet die Achse (4) im Schnittpunkt (8). Der Schnittpunkt (9) der Schwenkachsen (5, 6) befindet sich jedoch radial distanziert von der Achse (4). Die Schwenkachsen (5, 6) stehen zueinander in einem stumpfen Winkel ($\beta$), was zur Folge hat, daß die Trennebenen der Kopfteile (1, 2) bzw. (2, 3) zueinander im spitzen Winkel stehen. Vorzugsweise sind die Winkel so gewählt, daß sich Symmetrie ergibt. Im Beispiel steht die schräge Ebene zwischen den einzelnen Kopfteilen (1, 2) bzw. (2, 3) in einem gleichen Winkel, jedoch in umgekehrter Neigung zur Längsachse (4) des Getriebekopfes (1, 2, 3). Allerdings beschränkt sich die Erfindung nicht auf einen stumpfen Winkel ($\beta$) zwischen den Schwenkachsen (5, 6). Je größer die Gesamtabwinkelung der Kopfteile (1, 2, 3) zueinander gewünscht ist, desto kleiner kann der Winkel ($\beta$) (sogar über den rechten Winkel hinaus) gewählt werden.

Weiterhin ist im Interesse einer Symmetrie angenommen, daß die Achsen (5) und (6) in einem gleichen Winkel ($\alpha$) zur Längsachse (4) stehen.

Am vorderen Kopfteil (3) befindet sich eine Flanschplatte (10) mit einer Anflanschfläche (12) zur Befestigung des nicht dargestellten Werkzeuges, beispielsweise eines Schweißwerkzeuges. Mit (11) ist symbolisch ein Markierungsstift bezeichnet, der die Lage des Werkzeuges in Abhängigkeit von den später beschriebenen Schwenkmöglichkeiten erkennen läßt.

Im Beispiel der Fig. 2 ist die erste, einfache Schwenkmöglichkeit dargestellt, wonach der vordere Kopfteil (3) um die Schwenkachse (6) um 180° gedreht wird. Unter der Annahme, daß die Schwenkebenen zwischen den einzelnen Kopfteilen (1, 2, 3) symmetrisch zueinander sind und den Winkel 90° — ($\alpha$) zur Achse (4) bilden, ergibt sich, daß die Verdrehung des vorderen Kopfteiles (3) um seine Schwenkachse (6), und zwar um 180°, zum Ausschlag dieses Kopfteiles (3) um den Winkel ($2\alpha$) führt.

Wenn man nun den Getriebekopf in der in Fig. 2 gezeigten Stellung um die Achse (4) um 180° verdreht, wie dies in Fig. 3 dargestellt ist, ergibt sich die spiegelbildliche Stellung des vorderen Kopfteiles (3) gegenüber der Stellung in Fig. 2. Aus der Lage der Achsen (5, 6) sieht man, daß in keiner Stellung die Schwenkachse (6) koaxial zur Achse (4) zu liegen kommt. Infolgedessen ist eine Zweideutigkeit der Achsenlage ausgeschlossen. Man braucht demnach keine programm- oder steuerungstechnischen Manipulationen wie beim Stand der Technik durchzuführen.

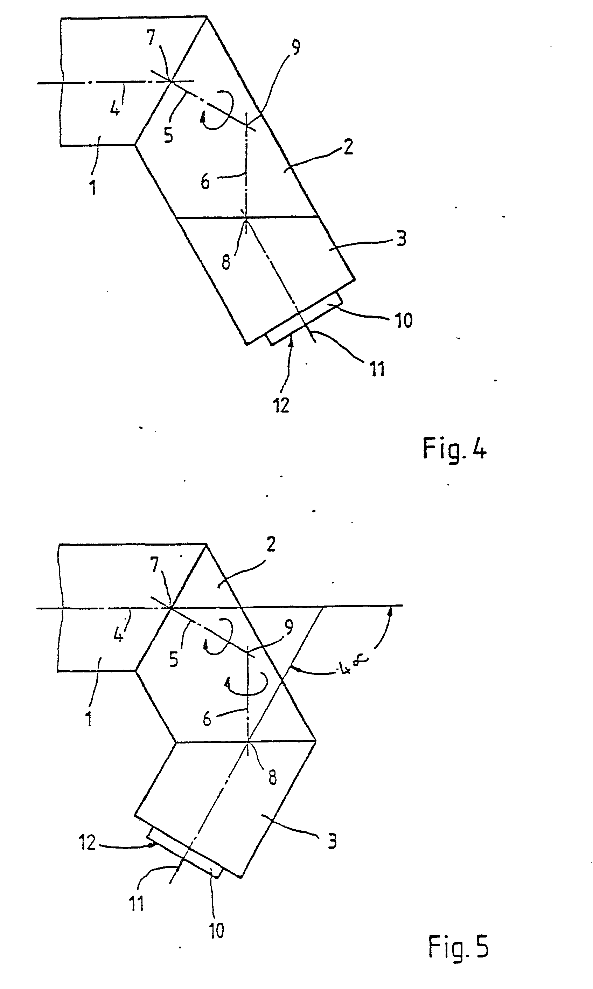

Die erfindungsgemäße Anordnung der Fig. 1 bietet aber darüber hinaus weitere Bewegungsmöglichkeiten des Gelenkkopfes, die sich über diejenigen des Standes der Technik hinaus erstrecken. Fig. 4 zeigt, daß beim Verschwenken des mittleren Kopfteiles (2) um die Schwenkachse (5) sich eine Winkellage ergibt, die derjenigen der Fig. 3 entspricht, ohne daß dabei aber der hintere Kopfteil (1) verdreht worden ist. In dieser in Fig. 4 gezeigten Stellung läßt sich der vordere Kopfteil (3) um die Schwenkachse (6) drehen, so daß sich ein Schwenkwinkel des vorderen Kopfteiles (3) gegenüber dem hinteren Kopfteil (1) um den Betrag ($4\alpha$) ergibt. Verdreht man in dieser Stellung den hinteren Kopfteil (1) um die Achse (4), dann ergibt sich ein maximaler Bewegungsspielraum für den symbolisch dargestellten Markierungsstift (11) (Fig. 5).

Dieser Bewegungsspielraum ist größer als derjenige des nächstliegenden Standes der Technik. Außerdem ergibt sich durch die erfindungsgemäße Anordnung der Vorteil, daß die Unfallgefahr beim Verschwenken der Teile (1, 2, 3) relativ zueinander durch Vermeidung von Eng- und Klemmstellen wesentlich reduziert werden konnte. Andererseits ist der Gegenstand der Erfindung in der Lage, das Werkstück in der gestreckten Lage des Getriebekopfes um die Achse (4) der Antriebswellen zu verschwenken, wie dies Fig. 1 zeigt. Zu diesem Zweck braucht lediglich die Flanschplatte (10) senkrecht zur Achse (4) am vorderen Kopfteil (3) angeordnet zu werden. Wünscht man diese Koaxialität des Stiftes (11) zur Achse (4) der Antriebswellen nicht, bleibt es unbenommen, die Lage der Flanschplatte (10) in einem anderen Winkel zu wählen.

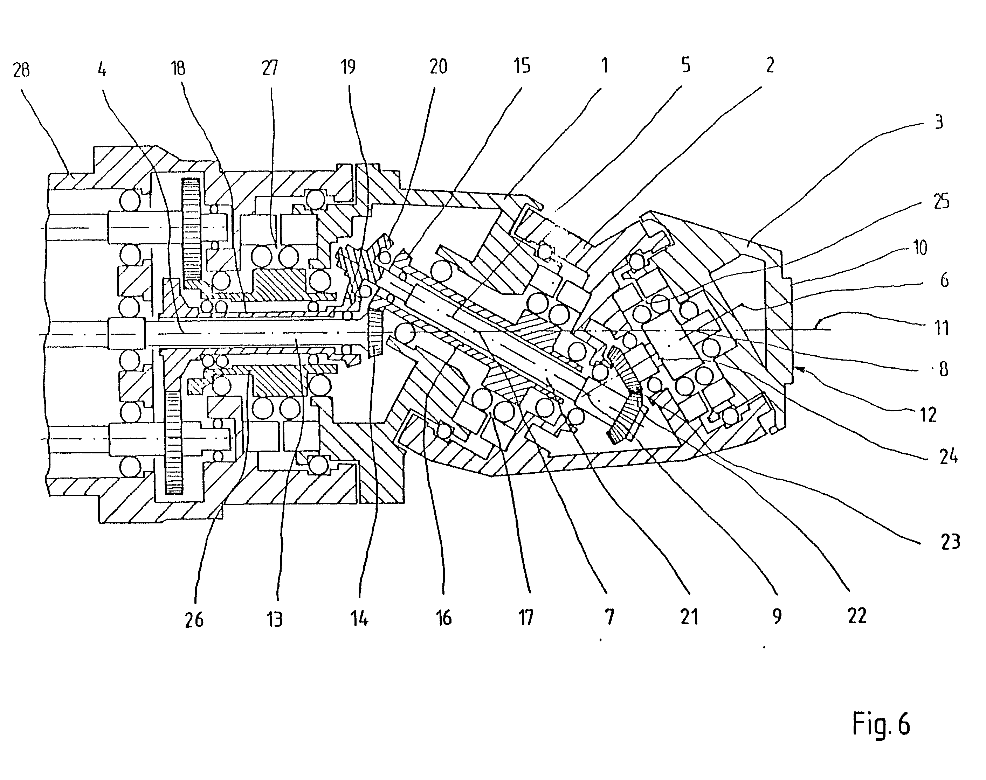

Das Ausführungsbeispiel der Fig. 6 zeigt den konstruktiven Aufbau des erfindungsgemäßen Getriebekopfes in der Strecklage seiner Teile. Danach ist eine innere Antriebswelle (13) über die Kegelräder (14, 15) mit einer Hohlwelle (16) verbunden, welche über ein Untersetzungsgetriebe (17) mit dem mittleren Kopfteil (2) drehschlüssig verbunden ist. Dieser mittlere Kopfteil (2) wird über diese Kegelradanordnung (14, 15) um die Schwenkachse (5) gedreht. Er ist über geeignete Lagerungen am vorderen Kopfteil (1) um eine zur Schwenkachse (5) senkrechte Ebene geführt.

Die mittlere Antriebswelle (18) wirkt über die Kegelräder (19, 20) auf die Zwischenwelle (21) ein, die mit der Schwenkachse (5) übereinstimmt. Am Ende der Zwischenwelle (21) sind Kegelräder (22, 23) zum Antrieb der Abtriebswelle (24) vorgesehen, welche sich im vorderen Kopfteil (3) befindet, der seinerseits gegenüber dem mittleren Kopfteil (2) drehbar gelagert ist und zwar um die Schwenkachse (6). Auch hier ist zwischen der Abtriebswelle (24) und dem vorderen Kopfteil (3) ein Untersetzungsgetriebe (25) vorgesehen.

Die äußere Antriebswelle (26) wirkt über das Untersetzungsgetriebe (27) direkt auf den vorderen Kopfteil (1) ein, der koaxial zum Auslegerarm (28) angeordnet und an diesem drehbar gelagert ist.

Sämtliche Untersetzungsgetriebe (17, 25, 27) sind folglich abtriebsseitig angeordnet, was eine weitgehend spielfreie, räumlich kompakte und damit kleinbauende Getriebekopfkonstruktion zur Folge hat. Diese Untersetzungsgetriebe (17, 25, 27) sind für hohe Untersetzungen vorgesehen.

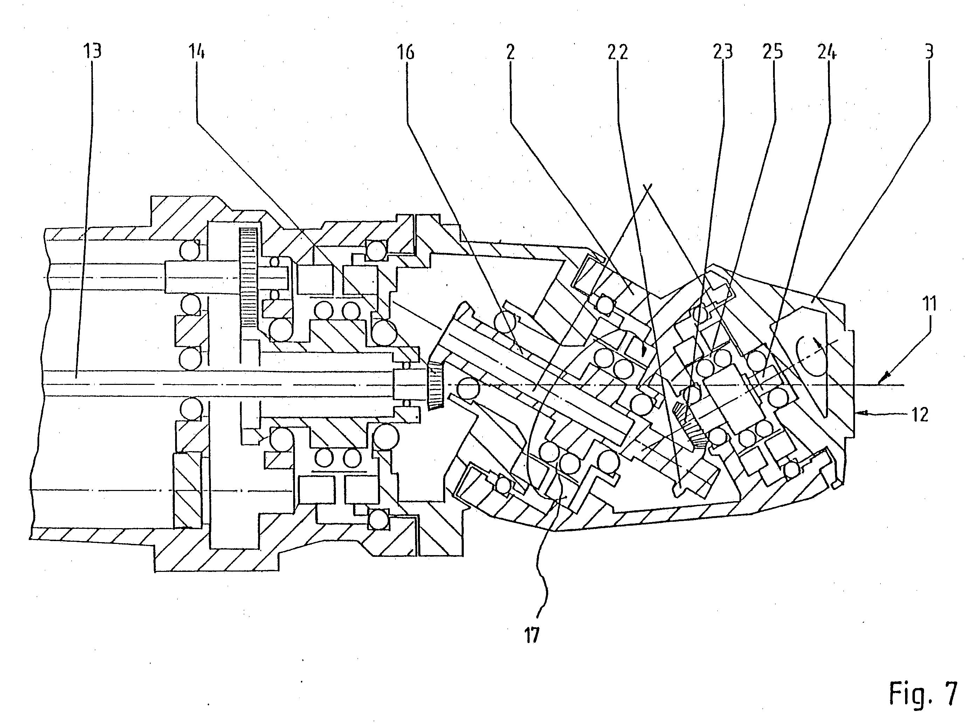

Ausgehend von dieser Anordnung lassen sich überraschende Varianten ableiten. So ist in Fig. 7 beispielsweise dargestellt, daß man auf einen Antriebsmotor verzichten kann, wenn man den mittleren und vorderen Kopfteil (2, 3) mit der gleichen Antriebswelle (13) antreibt. Das Kegelrad (14) treibt dabei die Hohlwelle (16) an, die über Kegelräder (22, 23) auf die Abtriebswelle (24) einwirkt. Das Übersetzungsverhältnis der Kegelräder (22, 23) sollte bevorzugt 1 : 1 und das Untersetzungsverhältnis der Getriebe (17, 25) sollte gleichgroß gewählt werden.

Daraus folgt bei entsprechender Drehrichtungsvorgabe durch den Antriebszug (14, 16, 22, 23, 24, 25), daß sich der vordere Kopfteil (3) gegensinnig zum mittleren Kopfteil (2) dreht. Man kann damit eine Überdeckung beherrschen, wie sie aus Fig. 5 hervorgeht, obwohl ein Antriebsmotor weniger zur Verfügung steht. Solche Anordnungen sind beispielsweise für Schutzgas-Schweißarbeiten ausreichend und zweckmäßig.

Will man den vorderen Kopfteil (3) im gleichen Drehsinn zum mittleren Kopfteil (2) bewegen, dann muß im Antriebszug (14, 16, 22, 23, 24, 25) eine entsprechende Drehrichtung, z. B. mittels eines Zwischenrades, vorgegeben werden. Ein solcher Fall ergibt die gleiche Raumüberdeckung, jedoch weniger Übersichtlichkeit des Bewegungsablaufes für den Programmierer. Die im Zwischenbereich gegenüber der ersten Möglichkeit veränderte Orientierung des vorderen Kopfteiles (3) kann jedoch auch, abhängig von den räumlichen Verhältnissen, bei geübten Programmierern Vorteile bieten.

Will man beide Möglichkeiten ausnutzen, wäre die Anordnung eines Wechselgetriebes zwischen den Kopfteilen (2, 3) notwendig, das mit Hilfe einer Kupplung (wie bei Werkzeugmaschinen üblich) Gleichsinn oder Gegensinn der Drehbewegung dieser Kopfteile (2, 3) einzuschalten gestattet.

Letzlich lassen sich die Kopfteile (2, 3) aber auch durch eine Kupplung mit Haltebremse verbinden, indem durch eine geeignete Schaltung der mittlere und vordere Kopfteil (2, 3) drehschlüssig zueinander gehalten werden, wodurch Bewegungen auch nach dem Stand der Technik möglich sind.

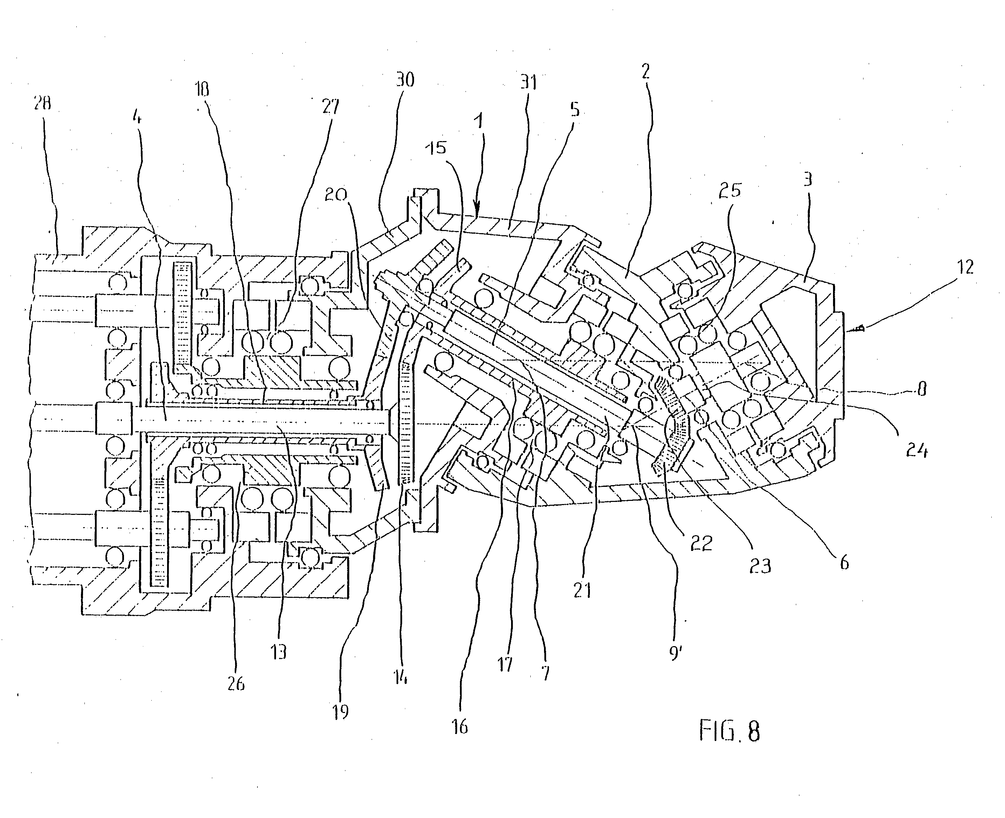

Beim Ausführungsbeispiel der Erfindung nach Fig. 8 liegt der Schnittpunkt (9') der Achse (5) der Zwischenwelle (21) mit der Achse (6) der Abtriebswelle (24) koaxial zur gemeinsamen Achse (4) der Antriebswellen (13, 18, 26). Zu diesem Zweck ist der Kopfteil (1) beim Beispiel in die Flanschteile (30, 31) zerlegt, von denen der Flanschteil (30) am Auslegerarm (28) drehbar gelagert ist und der Flanschteil (31) das Lager für den mittleren Kopfteil (2) trägt. Mit dem seitlichen Versatz des Flanschteiles (31) wird die Lage der Achse (5) quer zur Achse (4) versetzt, so daß der Schnittpunkt (9') der Achsen (5) und (6) in die gewünschte koaxiale Lage zur Achse (4) kommt.

Die Anflanschfläche (12) ist beim Ausführungsbeispiel radial zur Achse (4) ausgerichtet. Will man ein Werkzeug koaxial zur Achse (4) rotieren lassen, braucht man es nur längs der Anflanschfläche (12) radial zu verschieben, bis Koaxialität gegeben ist. In diesem Fall wird der Antrieb der Zwischenwelle (21) und der Abtriebswelle (24) blockiert.

Unter der Voraussetzung, daß die Anflanschfläche (12) radial zur Achse (4) steht, gelingt es auf diese Weise, das mit der Anflanschfläche (12) verbundene Werkzeug koaxial zur Achse (4) (oder achsparallel verschoben) zu bewegen, was besonders Bedeutung für solche Manipulatoren hat, deren einzelne Glieder entsprechend den rechtwinkeligen Raumkoordinaten beweglich geführt sind und einen erfindungsgemäß ausgebildeten Getriebekopf tragen.

Festzuhalten ist, daß beide Getriebeköpfe entsprechend den Ausführungsbeispielen der Figuren 6 und 8 in der Lage sind, Zweideutigkeiten in der rechnerischen Steuerung zu vermeiden und einen gegenüber dem Stand der Technik wesentlich vergrößerten Aktionsbereich gem. Fig. 5 zu erreichen.

Stückliste

1 vorderer Kopfteil
2 mittlerer Kopfteil
3 hinterer Kopfteil
4 Achse der Antriebswellen (4. Achse)
5 Schwenkachse des mittleren Kopfteiles
6 Schwenkachse des hinteren Kopfteiles
7 Schnittpunkt
8 Schnittpunkt
9 Schnittpunkt
9' Schnittpunkt
10 Flanschplatte
11 Markierungsstift
12 Anflanschfläche
13 innere Antriebswelle
14 Kegelrad
15 Kegelrad
16 Hohlwelle
17 Untersetzungsgetriebe
18 mittlere Antriebswelle

19 Kegelrad
20 Kegelrad
21 Zwischenwelle
22 Kegelrad
23 Kegelrad
24 Abtriebswelle (6. Achse)
25 Untersetzungsgetriebe
26 äußere Antriebswelle
27 Untersetzungsgetriebe
28 Auslegerarm
30 Flanschteil
31 Flanschteil

**Patentansprüche**

1. Getriebekopf für Manipulatoren, bestehend aus drei hintereinander angeordneten und um zueinander schräge Achsen (5, 6) gelagerten Kopfteilen (1, 2, 3), deren schräge Achsen (5, 6) in der Streckstellung des Getriebekopfes jeweils einen in entgegengesetzte Richtung sich öffnenden spitzen Winkel (α) mit der Längsachse (4) des Getriebekopfes bilden und sich derart schneiden, daß die von den schrägen Achsen (5, 6) gebildeten Winkelschenkel nach einer gemeinsamen Seite von der Längsachse (4) weisen, wobei am vorderen Getriebekopfteil (3) eine in der Streckstellung quer zur Längsachse (4) sich erstreckende Anflanschfläche (12) für ein Werkzeug angeordnet ist und zum Antrieb der Getriebekopfteile (1, 2, 3) drei konzentrisch zur Längsachse (4) sich erstreckende Antriebswellen (13, 18, 26) vorgesehen sind von denen eine der inneren Antriebswellen (18) über einen Winkeltrieb (19, 20) und eine um die schräge Drehachse (5) rotierende Zwischenwelle (21) mit dem das Werkzeug tragenden vorderen Kopfteil (3) und die andere der inneren Antriebswellen mit einem Winkeltrieb (14, 15) dessen Abtriebsrad (15) die Zwischenwelle (21) konzentrisch mit Spiel umgreift, mit dem mittleren Getriebekopfteil (2) verbunden und daß im mittleren Getriebekopfteil (2) mindestens ein hochuntersetzendes Untersetzungsgetriebe (25) für den Antrieb des vorderen Getriebekopfteiles (3), bevorzugt auch ein solches Untersetzungsgetriebe (17) für den Antrieb des mittleren Getriebekopfteiles (2) angeordnet sind.

2. Getriebekopf nach Anspruch 1, dadurch gekennzeichnet, daß sich die schrägen Achsen (5, 6) in einem abseits der Längsachse (4) des Getriebekopfes sich befindlichen Punkt (9) schneiden.

3. Getriebekopf nach Anspruch 1, dadurch gekennzeichnet, daß sich die schrägen Achsen (5, 6) in einem auf der Längsachse (4) des Getriebekopfes sich befindlichen Punkt (9') schneiden.

4. Getriebekopf nach Anspruch 3, dadurch gekennzeichnet, daß der hintere Kopfteil (1) aus zwei miteinander seitlich versetzt verbundenen Flanschteilen (30, 31) besteht, wodurch die Drehachsen (5, 6) der Zwischenwelle (21) und der Abtriebswelle (24) quer zur Längsachse (4) versetzt sind.

5. Getriebekopf nach Anspruch 1 oder einem der folgenden, dadurch gekennzeichnet, daß der mittlere und der hintere Kopfteil (2, 3) von einer gemeinsamen Antriebswelle (13) angetrieben sind.

6. Getriebekopf nach Anspruch 5, dadurch gekennzeichnet, daß der hintere Kopfteil (3) gegensinnig zum mittleren Kopfteil (2) angetrieben ist.

7. Getriebekopf nach Anspruch 5 oder 6, gekennzeichnet durch die Anordnung eines schaltbaren Wechselgetriebes zwischen den Antriebszügen des mittleren und hinteren Kopfteils (2, 3).

8. Getriebekopf nach Anspruch 5 oder folgenden, gekennzeichnet durch die Anordnung einer Schaltkupplung mit Haltebremse zwischen dem mittleren und dem hinteren Kopfteil (2, 3).

**Claims**

1. Gear head for manipulators, consisting of three head parts (1, 2, 3) disposed one behind the other and mounted about axes (5, 6) inclined with respect to each other, the inclined axes (5, 6) of which head parts, in the elongated position of the gear head, respectively form an acute angle (α), opening in opposite directions, with the longitudinal axis (4) of the gear head and intersect so that the angle legs formed by the inclined axes (5, 6) point towards a common side of the longitudinal axis (4), a surface (12) for the flange-mounting of a tool, extending in the elongated position at right angles to the longitudinal axis (4), being disposed on the front gear head part (3) and three drive shafts (13, 18, 26), extending concentrically to the longitudinal axis (4), being provided for driving the gear head parts (1, 2, 3), of which drive shafts one of the inner drive shafts (18) is connected by way of an angle drive (19, 20) and an intermediate shaft (21) rotating about the inclined axis of rotation (5) to the front head part (3) supporting the tool and the other of the inner drive shafts is connected by an angle drive (14, 15), whereof the output gear (15) surrounds the intermediate shaft (21) concentrically with play, to the central gear head part (2) and that disposed in the central gear head part (2) is at least one reduction gear (25) having a high reduction ratio, for the drive of the front gear head part (3), preferably also a reduction gear (17) of this type for the drive of the central gear head part (2).

2. Gear head according to Claim 1, characterised in that the inclined axes (5, 6) intersect at a point (9) located aside of the longitudinal axis (4) of the gear head.

3. Gear head according to Claim 1, characterised in that the inclined axes (5, 6) intersect at a point (9') located on the longitudinal axis (4) of the gear head.

4. Gear head according to Claim 3, characterised in that the rear head part (1) consists of two flange parts (30, 31) connected to each other so that they are laterally offset, due to which the axes of rotation (5, 6) of the intermediate shaft (21) and of the output shaft (24) are offset at right angles to the longitudinal axis (4).

5. Gear head according to Claim 1 or one of the following, characterised in that the central and the rear head part (2, 3) are driven by a common drive shaft (13).

6. Gear head according to Claim 5, characterised in that the rear head part (3) is driven in the opposite direction to the central head part (2).

7. Gear head according to Claim 5 or 6, characterised by the arrangement of a controllable change-speed gear between the drive trains of the central and rear head part (2, 3).

8. Gear head according to Claim 5 or the following, characterised by the arrangement of a shifting coupling with a blocking brake between the central and the rear head part (2, 3).

## Revendications

1. Tête opérative pour manipulateurs, constituée de trois parties (1, 2, 3) disposées l'une derrière l'autre et pouvant tourner autour d'axes (5, 6) obliques l'un par rapport à l'autre, ces axes obliques (5, 6) formant, dans la position étendue de la tête opérative, chacun avec l'axe longitudinal (4) de la tête opérative, un angle aigu (α) qui s'ouvre dans le sens opposé à l'autre angle aigu et se coupant d'une manière telle que les branches de l'angle formé par les axes obliques (5, 6) soient dirigées d'un même côté de l'axe longitudinal (4), étant entendu qu'une face de bridage (12) pour un outil, s'étendant perpendiculairement à l'axe longitudinal (4) dans la position étendue, est prévue sur la partie antérieure (3) de la tête opérative et que trois arbres d'entraînement (13, 18, 26) s'étendant concentriquement à l'axe longitudinal (4) sont prévus pour l'entraînement des parties (1, 2, 3) de la tête opérative, un des arbres d'entraînement intérieurs (18) étant relié à la partie antérieure (3) de la tête portant l'outil par l'intermédiaire d'un engrenage conique (19, 20) et d'un arbre intermédiaire (21) tournant autour de l'axe de rotation oblique (5) et l'autre des arbres d'entraînement intérieurs étant relié à la partie médiane (2) de la tête par l'intermédiaire d'un engrenage conique (14, 15) dont la roue de sortie (15) entoure l'arbre intermédiaire (21) concentriquement avec jeu, et dans la partie médiane (2) de la tête opérative, au moins un réducteur à forte démultiplication (25) est prévu pour l'entraînement de la partie antérieure (3) de la tête et un tel réducteur (17) est, de préférence, également prévu pour l'entraînement de la partie médiane (2) de la tête opérative.

2. Tête opérative suivant la revendication 1, caractérisée en ce que les axes obliques (5, 6) se coupent en un point (9) situé à l'écart de l'axe longitudinal (4) de la tête opérative.

3. Tête opérative suivant la revendication 1, caractérisée en ce que les axes obliques (5, 6) se coupent en un point (9') situé sur l'axe longitudinal (4) de la tête opérative.

4. Tête opérative suivant la revendication 3, caractérisée en ce que sa partie postérieure (1) est constituée de deux pièces formant brides (30, 31) reliées l'une à l'autre avec un décalage latéral, de sorte que les axes de rotation (5, 6) de l'arbre intermédiaire (21) et de l'arbre de sortie (24) sont décalés transversalement à l'axe longitudinal (4).

5. Tête opérative suivant la revendication 1 ou l'une quelconque des revendications suivantes, caractérisée en ce que sa partie médiane et sa partie postérieure (2, 3) sont entraînées par un arbre d'entraînement commun (13).

6. Tête opérative suivant la revendication 5, caractérisée en ce que sa partie postérieure (3) est entraînée dans un sens opposé à sa partie médiane (2).

7. Tête opérative suivant la revendication 5 ou 6, caractérisée en ce qu'un dispositif de renversement de marche commutable est prévu entre les trains d'entraînement de sa partie médiane et de sa partie postérieure (2, 3).

8. Tête opérative suivant la revendication 5 ou l'une quelconque des revendications précédentes, caractérisée en ce qu'un embrayage commutable à frein d'arrêt est prévu entre sa partie médiane et sa partie postérieure (2, 3).

Fig. 1

Fig. 2

Fig. 3

Fig. 4

Fig. 5

2

Fig. 6

Fig. 7

EP 0 169 943 B1

FIG. 8